# EUROPEAN PATENT APPLICATION

(11) **EP 1 645 381 A1**
(43) Date of publication of application: **12.04.2006**
(21) Application number: 04747492.9
(22) Date of filing: 14.07.2004
(51) Int. Cl.: B29B 7/80, B29C 47/36, B29C 45/46

(54) **DEVICE FOR IMPARTING ULTRASONIC VIBRATION TO RESIN MATERIAL, METHOD OF MELT-MOLDING RESIN MATERIAL USING THE DEVICE, AND RESIN COMPOSITION**

(30) Priority: 16.07.2003 JP 2003197539
(71) Applicant: IDEMITSU KOSAN CO., LTD., Tokyo 100-8321 (JP)
(72) Inventor: SUETSUGU, Yoshiyuki, 2990107 (JP); OTSUKI, Yasuhiko, 2990107 (JP); SATO, Atsushi, 2990107 (JP)
(74) Representative: Gille Hrabal Struck Neidlein Prop Roos
(86) International application number: PCT/JP2004/010026
(87) International publication number: WO 2005/007373

(57) **Abstract**

There is here disclosed a technique which can improve mechanical properties such as strength and impact resistance of molded articles without noticeably changing molding materials and rebuilding a molding apparatus.

In a molding method in which the molding materials are fed to a mold disposed at one end of a cylinder while the molding materials in the cylinder are molten and kneaded, the molding materials can be molded while vibration is applied to the molding materials in a direction crossing a flow direction of the resin material at right angles. The vibration does not have to possess any node portion on a surface which contacts the molding material.

## Description

### Technical Field

The present invention relates to an ultrasonic vibration applying apparatus which applies ultrasonic vibration to a resin in a molten state. More particularly, it relates to an apparatus of applying ultrasonic vibration to a resin material which can be used in extrusion or injection molding and can provide high-quality molded articles having improved physical properties and molding properties, a method of kneading, compounding and blending a resin material by use of the ultrasonic vibration applying apparatus, and a resin composition.

### Background Art

In a kneading device for melting and kneading a resin material such as a plastic material to obtain molded articles having a desired shape, an extrusion machine, or an injection molding machine, improvement of functionality of the moldable resin material, improvement of kneadability or compatibility of the resin material at a time of mixing a plurality of kinds of resins, improvement of dispersibility at a time of blending an additive or a filler, and facilitation of resin modification are remarkably important to obtain the high-quality molded articles. To achieve these objects, various suggestions have heretofore been made (see Patent Documents 1, 2 and 3, for example).
Patent Document 1 describes a technique of adding an additive such as a compatibility accelerator to the resin material for the purpose of improving the moldability and functionality.
Patent Document 2 describes a technique of improving the dispersibility of the filler in the resin material, thereby improving the physical properties and molding properties.
Patent Document 3 describes a technique of adding a suitable amount of a peroxidizing agent to the resin material and a modifying agent, and then melting and kneading the mixture, in a case where the resin is modified by reaction extrusion.

[Patent Document 1] Japanese Patent Application Laid-Open No. 5-247282
[Patent Document 2] Japanese Patent Application Laid-Open No. 10-101870
[Patent Document 3] Japanese Patent Application Laid-Open No. 63-117008

However, according to the technique described in Patent Document 1, the compatibility accelerator is added for the sake of the compatibility, and there is a problem that the compatibility accelerator easily makes a domain, which deteriorates efficiency. In addition, there is another problem that an effect of the improvement of the various physical properties is limited. The optimum compatibility accelerator is not always present for each of the resin materials, and hence, there is a further problem that great efforts are required to find the optimum compatibility accelerator for each of the different resin materials.

In the technique described in Patent Document 2, a strong kneading operation or plural kneading operations are performed in order to disperse a fine filler, but this method has a problem that the improvement of the dispersibility of the filler is also limited. In addition, the plural kneading operations are not efficient. Moreover, there is another problem that the excessive kneading operation deteriorates resin properties such as kinetic properties and a color tone.

In the technique described in Patent Document 3, a suitable amount of a peroxide is added to the resin material, but in this method, it is difficult to control a modification quantity, a molecular weight and the like, and additionally, there are additional problems such as odor and coloring caused by the peroxide.

Moreover, the techniques described in Patent Documents 1, 2 and 3 individually solve problems such as the improvement of the functionality, the improvement of the kneadability or compatibility, the improvement of the dispersibility of the filler and the facilitation of the resin modification, and a technique capable of solving these problems at one sweep is demanded.

Then, an attempt to solve these problems by use of ultrasonic vibration has been proposed in, for example, Patent Document 4. However, even in the technique described in Patent Document 4, there is a problem that the effect of the improvement of the kinetic properties is not easily exerted in the case of injection molding and so the effect is restrictive.
[Patent Document 4] U.S. Patent No. US6528554.

### Disclosure of the Invention

The present invention has been developed in consideration of the above-described problems, and objects of the present invention are to provide an ultrasonic vibration applying apparatus capable of improving functionality such as moldability, or kneadability or compatibility of a resin blend obtained by mixing two or more resins, improving dispersibility of an additive or filler in a resin material in a case where the additive or filler is added to the resin, and easily modifying properties of the resin without adding a large amount of peroxide, and to provide a method of kneading, compounding and blending a resin material which is capable of obtaining high-quality molded articles superior in mechanical properties such as rigidity and impact resistance, appearance, adhesive properties to glass fiber and the like by use of the ultrasonic vibration applying apparatus, and to provide a resin composition.

To solve the above-described problems, as a result of intensive researches, the present inventor has found that the above-described plurality of problems can be solved at one sweep, when taking measures: 1. leakage of ultrasonic vibration is suppressed, and the ultrasonic vibration having a predetermined frequency and amplitude is applied to a resin material in a contact state with the resin material in a concentrated manner; 2. a vibrator or the like which applies the ultrasonic vibration to the resin material in the contact state with the resin material is provided with high adhesive properties with respect to the resin material flowing through a channel and having a molten state; and 3. the ultrasonic vibration is transmitted in a direction crossing a flow direction of the resin material at right angles.

Concretely, an ultrasonic vibration applying apparatus according to claim 1 is an ultrasonic vibration applying apparatus which applies an ultrasonic vibration to a resin material in a molten state, and the apparatus comprises a vibrator which applies the ultrasonic vibration to the resin material, or a vibration transmission member which transmits the vibration of the vibrator to the resin material, wherein the vibrator or the vibration transmission member is disposed in a channel of the resin material in such a manner as to bring the vibrator or the vibration transmission member into contact with the resin material; and vibration transmission inhibition means is disposed in such a manner as to substantially inhibit members other than the resin material from being vibrated by the vibration of the vibrator or the vibration transmission member.

Here, the "vibrator" is a generator of the ultrasonic vibration, and the "vibration transmission member" is a member which is attached to, for example, a tip of the vibrator to transmit the vibration of the vibrator to the resin material. The vibrator or the vibration transmission member may also constitute a part of a channel through which the resin material flows. It is to be noted that the vibrator, or a member constituted of the vibrator and the vibration transmission member will be sometimes generically referred to as the "vibrating member".

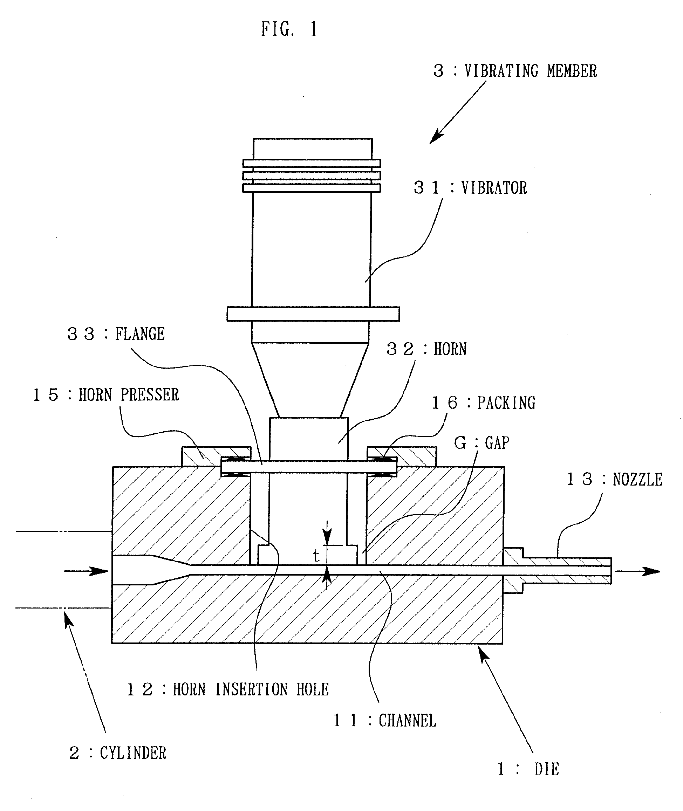

Moreover, the "other member" means an article (member) which partially or entirely contacts the vibrating member, and includes, for example, a die 1 or a horn presser 15 of FIG. 1.

In the present invention, when the vibration transmission inhibition means is disposed, leakage of the vibration from the vibrator or the vibration transmission member can be inhibited. As a result, improvement of rigidity or impact resistance, or improvement of dispersibility is achieved at a level that cannot be predicted from conventional techniques of molded articles. This is supposedly because the vibration transmission inhibition means is disposed to apply the vibration to the resin material in a concentrated manner, and cavitation or pressure vibration by the ultrasonic can be effectively caused inside the resin material.

As described in claim 2, a member having high adhesive properties to the resin material may be selected as the vibrator or the vibration transmission member.

When the adhesive properties to the resin material are high, the resin is allowed to follow the vibration of the vibrating member or the vibration transmission member, the cavitation or pressure vibration by the ultrasonic can be effectively caused inside the resin material, and an effect by the present invention can further be enhanced.

It is to be noted that in a case where melting and kneading are performed using the ultrasonic vibration applying apparatus of the present invention, "the adhesive properties of the vibrating member to the resin material are high" indicates that, for example, when a test is carried out in a procedure:
(1) the vibrating member is kept at temperature T°C of a resin to be melted and kneaded; and
(2) while the vibrating member of the above (1) is ultrasonically vibrated, an operation of "pressing and immediately releasing" the member with respect to the resin material held at T°C is repeated ten times,
the resin material is attached to 1/5 or more of a surface area of the vibrating member of the above (1).

Not only in the vibrating member but also in a metal surface constituting a resin channel in a melting and kneading machine, particularly in a metal surface constituting the resin channel in the vicinity of an ultrasonic applied portion, a material for enhancing the adhesive properties to the resin material is selected, or processing or treatment for enhancing the adhesive properties to the resin material is performed, and accordingly the effect by the present invention can further be enhanced.

As described in claim 3, the vibrator or the vibration transmission member is preferably positioned so as to transmit the vibration in a direction crossing a flow direction of the resin material at right angles.

As described in claim 4, the vibration transmission inhibition means may be an elastic member interposed between the vibrating member or the vibration transmission member and the other member. In the elastic member, as described in claim 5, a connecting portion which connects the vibrating member or the vibration transmission member to the other member is protrusively formed in a node portion of the vibration transmitted inside the vibrating member or the vibration transmission member, and the elastic member may be interposed between the connecting portion and the other member.

In this manner, the leakage of the vibration can be suppressed more effectively.

The elastic member preferably has a modulus of longitudinal or transverse elasticity sufficiently smaller than that of the vibrating member or the vibration transmission member, and to effectively inhibit the transmission of the vibration to the other member, as described in claim 6, E < 0.3Eh is satisfied wherein Eh is an elasticity of the vibrating member or the vibration transmission member, and E is an elasticity of the elastic member.

The vibration transmission inhibition means is not limited to the elastic member, and as described in claim 7, the means may also be a gap interposed between the vibrating member or the vibration transmission member and the other member. When the gap and the elastic member are used together, the inhibitive effect of the vibration transmission can further be improved.

A size of the gap also differs with a type of the resin material, but as described in claim 8, a size of a general polymer or a copolymer may be set to 0.05 mm or more. When the size is smaller than 0.05 mm, the gap is excessively reduced, and it becomes difficult to obtain a sufficient vibration transmission inhibitive effect. Furtheremore to prevent the leakage of the resin material, a size of the gap is preferably set to 0.5 mm or less.

As a material forming the vibrating member, from a viewpoint of durability against the ultrasonic vibration, a material which does not have very high adhesive properties to the resin material, such as duralumin, is sometimes used. Therefore, when the vibrating member is formed of the material, as described in claim 9, a vibration-applied surface, on which the vibrating member or the vibration transmission member contacts the resin material to apply the vibration thereto, is subjected to surface processing and/or surface treatment for improving the adhesive properties to the resin material, and the adhesive properties to the resin material may be improved.

As the surface processing or the surface treatment, as described in claim 10, its example is formation of grooves or concave/convex portions by machining, sand blasting, etching or the like, plating, flame spraying, and coating of an adhesive properties improver, or a combination of them.

It is to be noted that the "flame spraying" is a known processing method in which a molten metal is allowed to collide with an object at a high speed to thereby modify the properties of a metal surface. As the metal to be flame-sprayed, a metal having high adhesive properties to the resin material may be selected. After the flame spraying or plating, in general, the surface is polished and finished to be flat and smooth, but when the polishing is adjusted to leave the concave/convex portion on the surface, the adhesive properties to the resin material can be further enhanced.

Furthermore, the adhesive properties improver needs to be appropriately selected in accordance with a type or properties of the resin material, and, for example, as shown in claim 11, maleic anhydride or a composition of maleic acid may be used.

As described in claim 12, as the vibrator or the vibration transmission member, a horn may be used which has any shape of a columnar shape, plate shape, ring shape, circular cone shape, truncated cone shape, conical shape, exponential shape, rectangular parallelepiped shape, cube shape, and a shape in which a slit, cut or flange is formed on any one of these shapes. As described in claim 13, the plurality of horns may also be arranged in series or in parallel along the channel, and as described in claim 14, the plurality of horns are arranged around the channel, and the vibration may also be applied to the resin material from different directions.

As described in claim 15, the ultrasonic vibration applying apparatus of the present invention constituted as described above may also be attached to a cylinder of an extrusion machine, an injection molding machine or the like, or may also be attached to a cylinder of an extruder or a kneader, a channel on a downstream side of the cylinder, or a mold. When the apparatus is attached to the cylinder of an injection molding machine or a melting and kneading machine or the like, and for example, the vibrating member may also be constituted of one vibrator or a plurality of vibrators and a vibration transmission member which transmits the vibration of the vibrator as vibration in a diametric direction to the cylinder so as to apply the vibration in a vertical direction with respect to flow of the resin material in the cylinder. It is to be noted that as the vibration transmission member, an annular type attached to the cylinder may be used.

Moreover, the resin material which applies the ultrasonic vibration may be one of a single type of resin and/or elastomer, a mixture of two or more types of resin and/or elastomer, and a mixture of resin and/or elastomer and a filler, and may also be either a thermosetting material or a thermoplastic material.

As described in claim 16, a resin material which applies ultrasonic waves may be either a mixture of two or more resins and/or elastomers or a mixture of a resin and/or an elastomer and a filler. The resin material may be one of a single resin and/or elastomer, a mixture of two or more resins and/or elastomers, and a mixture of a resin and/or an elastomer and the filler, and it may also be either a thermosetting material or a thermoplastic material.

As the resin material, a resin composition which has high adhesive properties to the vibration transmission member or the vibrator is preferably selected. In consideration of durability or the like in actual production, materials capable of continuing to apply the ultrasonic vibration are limited to a certain degree, such as stainless steel, duralumin, and steel. Therefore, the resin material may also be blended with small amounts of materials for improving the adhesive properties such as maleic anhydride and modified resin to enhance the adhesive properties between the vibration transmission member and the vibrator.

Moreover, engineering plastics such as polycarbonate and polyarylelene sulfide, especially engineering plastics having polarity with good adhesive properties to a metal material may also be selected as the resin material.

In a melting and kneading method of a resin material of the present invention, as described in claim 17, the ultrasonic vibration applying apparatus according to any one of claims 1 to 16 is disposed in a channel through which the resin material in a molten state flows, the ultrasonic vibration is applied to the resin material which flows through the channel from a direction crossing a flow direction of the resin material at right angles, and the application of the ultrasonic vibration through the vibrator or the vibration transmission member is performed under conditions that members other than the vibrator or the vibration transmission member are not substantially vibrated.

According to the method, high-quality molded articles superior in rigidity, impact resistance, appearance, adhesive properties to glass fiber and the like can be obtained. This is supposedly because the other members are not substantially vibrated, accordingly the vibration is applied to the resin material in a concentrated manner, and cavitation or pressure vibration by the ultrasonic can be effectively generated inside the resin material. There is also an effect that the vibrations of the other members are inhibited to prevent vibration fatigues of the other members.

The invention described in claim 18 is directed to a resin composition produced by use of the ultrasonic vibration applying apparatus according to one of claims 1 to 16.

As described in claim 19, the resin composition according to claim 18 is produced by mixing two or more thermoplastic resins and/or elastomers, wherein an interface is formed between the mixed thermoplastic resins, and one thermoplastic resin oozes like a feather into the other thermoplastic resin in the interface.

According to the present invention, when the ultrasonic vibration is simply applied to the resin material in a molten state under certain conditions, kneadability or compatibility of the resin blend mixed with two or more types of resin materials can be improved. When the additive or filler is added to the resin material, dispersibility of the additive or filler in the resin material can be improved. Furthermore, the properties of the resin can be easily modified without adding any modifying agent.

The present invention is preferably usable in a method of manufacturing pellets of a resin composition in which the above characteristics are utilized.

Moreover, by use of the resin material produced by applying a certain ultrasonic vibration by the ultrasonic vibration applying apparatus of the present invention, the high-quality molded articles superior in mechanical properties such as rigidity and moldability can be obtained.

### Brief Description of the Drawings

FIG. 1 is a sectional view of a die showing that a horn of an ultrasonic oscillator is attached to the die of an extruder according to one embodiment of the present invention;
FIG. 2 is a perspective view showing a relation in attachment between a channel of a resin material and a horn in a case where a columnar horn is used;
FIG. 3 is a perspective view showing a relation in attachment between the channel of the resin material and the horn in a case where a rectangular parallelepiped horn is used, (a) shows a case where a single horn is disposed in the channel, and (b) shows a case where a plurality of horns are arranged along a flow direction of the material;
FIG. 4 shows (a) a sectional view in a cylinder longitudinal direction and (b) a sectional view in a cylinder diametric direction, showing a relation in attachment between the channel of the resin material and the horn in a case where an annular vibration transmission member (horn) is used; and
FIG. 5 is a sectional view showing an example in which an ultrasonic output combiner.

### Best Mode for Carrying out the Invention

A preferable embodiment of an ultrasonic vibration applying apparatus of the present invention will be described hereinafter in detail with reference to the drawings.

FIG. 1 is a sectional view of a die of an extruder to which a horn of an ultrasonic oscillator is attached according to one embodiment of the present invention. It is to be noted that in the following description, in a "resin material", unless especially designated, needless to say, the resin material in a narrow sense means a resin material containing thermoplastic elastomer.

The resin material heated-melted in a cylinder 2 is supplied to a nozzle 13 through a channel 11 in a die 1, and pushed out of a tip of the nozzle 13. A vibrating member 3 is attached to a portion halfway in the die 1. The vibrating member 3 is constituted of a vibrator 31 connected to an ultrasonic supply source (not shown), and a horn 32 which is a vibration transmission member attached to a tip of the vibrator 3. A horn insertion hole 12 is formed halfway in the die 1, and reaches the channel 11. The horn 32 is inserted into the horn insertion hole 12, and an end surface of the horn constitutes a part of the channel 11.

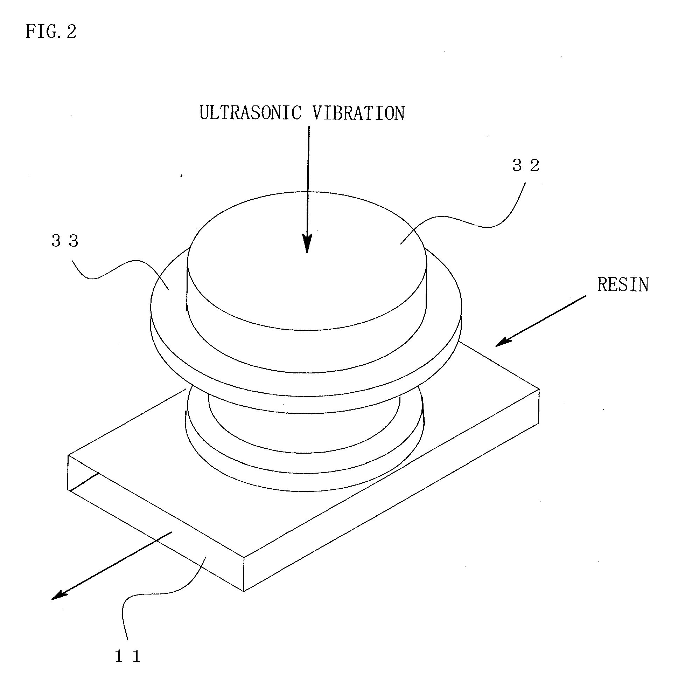

In this embodiment, as shown in FIG. 2, the horn 32 is formed in a columnar shape, and ultrasonic vibration is applied to the resin material flowing through the channel 11 and in a molten state from a direction crossing a flow direction at right angles.

An annular flange 33 extending to an opening peripheral edge of the horn insertion hole 12 (see FIG. 1) is protrusively formed in a portion halfway in the horn 32. Moreover, the flange 33 is fixed to the die 1 by a horn presser 15 and a packing 16 in the opening peripheral edge.

### [Another Embodiment of Horn]

It is to be noted that a configuration of the horn is not limited to a columnar shape, and various configurations can be selected such as a plate shape, a ring shape, a circular cone shape, a truncated cone shape, a conical type, and an exponential type.

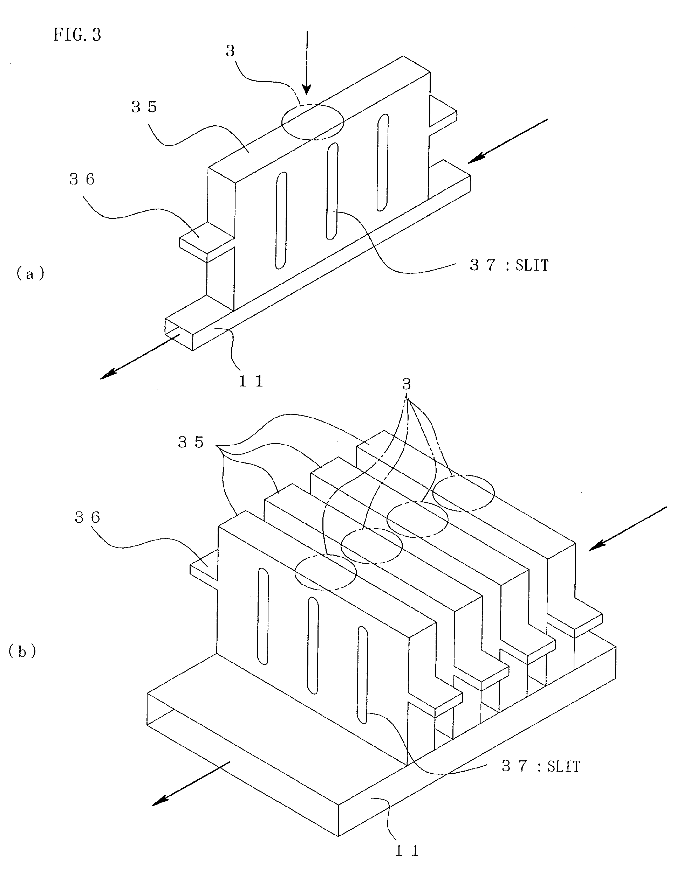

FIG. 3(a) is a perspective view showing another configuration of the horn which is usable in the present invention.

In the embodiment, one rectangular parallelepiped horn 35 is attached to the die 1. A plurality of elongated slits 37 having a longitudinal axis in an applying direction of the ultrasonic vibration are formed in the horn 35. In an example shown in FIG. 3(a), the horn 35 is attached while a longitudinal direction of the horn is directed in a flow direction of the material flowing through the channel 11.

In an example shown in FIG. 3(b), a plurality of horns 35 each of which is similar to that shown in FIG. 3(a) are attached to a broad channel 11. In this case, the longitudinal direction of the channel 11 is directed in a direction intersecting with the flow direction of the material which flows through the channel 11.

In either of FIGS. 3(a)(b), the ultrasonic vibration from the horn 35 is applied to the resin material from a direction crossing the resin material which flows through the channel 11 at right angles. Even in FIGS. 3(a)(b), flanges 36 are protrusively formed on opposite ends of the horn 35, and the flange 36 is connected to the die 1 via the horn presser 15 and the packing 16.

### [Ultrasonic Vibration]

As described above, the ultrasonic vibration applied to the resin material from the horn 32 crosses the flow direction of the molten resin substantially vertically. The vibrator 31 is vibrated by an ultrasonic oscillator (not shown). Since the ultrasonic oscillator handles a change of resonance frequency accompanying a temperature change, or an acoustic load variation accompanying a change of condition, the oscillator is preferably of an automatic frequency tracking type provided with an amplitude control circuit.

Moreover, when a necessary ultrasonic output does not reach a required value with one vibrator 31, a plurality of vibrators 31 may also be used. In this case, the necessary number of vibrators 31 having the same vibrating properties are prepared, and the vibrators may be attached to an outer peripheral surface of the horn 32 at equal intervals.

A frequency and amplitude of the ultrasonic vibration which can effectively generate cavitation or pressure vibration by the ultrasonic inside the resin material flowing through the channel 11 and in a molten state may be selected. Concrete frequency and amplitude differ with the type of the resin, and need to be selected from experiments or experimental values. In a general polymer or a copolymer, the frequency may be selected in a range of 10 to 100 kHz, preferably 15 KHz to 25 KHz, and the amplitude may be selected in a range of 1 µm to 50 µm.

### [Adhesive Properties of Horn to Resin]

Adhesive properties between the horn 32 and the resin material in the molten state are preferably high. When the adhesive properties are low, physical properties and the like of the resin material cannot be enhanced. It is presumed that the resin material does not follow the vibration of the horn 32 and the cavitation or pressure vibration by the ultrasonic does not effectively occur.

Therefore, a material of the horn 32 having good adhesive properties to the resin material in a molten state is selected as long as the material has a necessary durability against the ultrasonic vibration, and a transmission loss of vibration is small. When the resin material contains carboxylic anhydride or a resin modified by the anhydride, examples of the horn material having good adhesive properties may include duralumin, titanium, stainless steel, steel materials such as carbon steel and alloy steel, soft iron and the like.

Moreover, in a case where there is not any material having good resin adhesive properties in the materials usable as the horn material, the end surface of the horn 32 may also be plated with the material having the good resin adhesive properties, or a metal having good adhesive properties is molten, allowed to collide with the horn 32 at a high speed, and flame-sprayed to modify the properties of the surface of the metal constituting the horn 32. As the metal to be plated or flame-sprayed, a material having high adhesive properties to the resin material may be selected. It is to be noted that polishing of the surface performed after the flame-spraying or plating may be adjusted to leave a concave/convex portion, and the adhesive properties of the resin material may also be further enhanced.

The adhesive properties of the horn 32 with respect to the resin material can be tested in various methods. For example, the horn 32 is heated at a temperature substantially equal to that of the molten resin, the tip of the ultrasonically vibrated horn 32 is brought into contact with the resin material in a molten state a plurality of times (e.g., ten times), and it may be judged whether or not the resin material is attached to 1/5 or more of the horn 32.

Moreover, to improve the adhesive properties of the horn 32 to the resin material, a micro concave/convex portion may be formed in the end surface of the horn 32 by sand blasting or etching, or a groove may also be formed by machining or laser processing. An adhesive properties improver for improving the adhesive properties may also be used. The adhesive properties improver differs with types or properties of the resin materials, but examples of a general polymer or a copolymer include maleic anhydride and compositions of maleic acid.

### [Vibration Transmission Inhibition Means]

The vibration of the horn 32 is preferably inhibited from being transmitted members other than the resin material flowing through the channel 11, such as the die 1 and the cylinder 2. When the ultrasonic vibration is transmitted to the other members except the resin material, energy of the ultrasonic vibration is accordingly consumed uselessly. Additionally, when the other members forming the channel 11 vibrate at a frequency different from that of the vibrator 31, there is a possibility that an ultrasonic effect is impaired. This also damages the die 1 or the cylinder 2.

In the embodiment, to inhibit the vibration transmission, the packing 16 which absorbs the vibration is interposed between the horn 32 and the die 1. As described later, a gap G having a certain dimension is interposed between the horn 32 and the inner peripheral surface of the horn insertion hole 12 of the die 1. This gap G also functions as vibration transmission inhibition means.

### [Packing]

The packing 16 which is the vibration transmission inhibition means is interposed between the horn presser 15 and the flange 33. Assuming that the horn 32 has an elasticity Eh, elasticity (modulus of longitudinal or transverse elasticity) E of the packing 16 may be selected to obtain E < 0.3Eh, preferably E < 0.1Eh. As the material of the packing 16, a rubber, resin, or paper member impregnated with resin, metal or the like is usable, when the elasticity conditions are satisfied, and the material has heat resistance.

### [Gap]

A dimension of the gap G may be appropriately selected in a range larger than 0.05 mm and smaller than 0.5 mm. When the dimension of the gap G is 0.05 mm or less, the gap G is excessively small, the vibration of the horn 32 is easily transmitted to the die 1, and the die 1 is vibrated. It is to be noted that when the gap G is larger than 0.5 mm, there is a possibility that the resin material flowing through the channel 11 from the gap G easily leaks, but when there is not such a possibility, or when means for preventing the leak of the resin material is disposed in a portion other than the gap G, the gap G may exceed 0.5 mm.

Moreover, the gap G is not formed entirely in the horn 32 inserted in the horn insertion hole 12, and may also be partially formed in a predetermined dimension t from the tip surface of the horn 32. The dimension t depends on the material or the size of the horn 32, but is set to 1 mm or more in consideration of strength, or is preferably set to 30 mm or less in consideration of an effect by the gap G.

It can be confirmed whether or not the vibration of the horn 32 is transmitted to the die 1 or the cylinder 2, for example, by the following procedure. That is, the resin material in a molten state is supplied to the channel 11 of the die 1 from the cylinder 2 in a state in which the horn 32 is attached to the die 1.

Moreover, the flow of the resin material is stopped in a comparatively low pressure state of 1 MPa or less, and thereafter the horn 32 is vibrated. Moreover, the ultrasonic vibration is applied to the resin material from the horn 32. Moreover, a metal piece of iron, copper, brass, aluminum or the like having a modulus of elasticity similar to that of the horn 32 (width of 2 to 20 mm, length of about 50 to 250 mm) is pressed onto the die 1 or the cylinder 2 to confirm whether or not the vibration is transmitted.

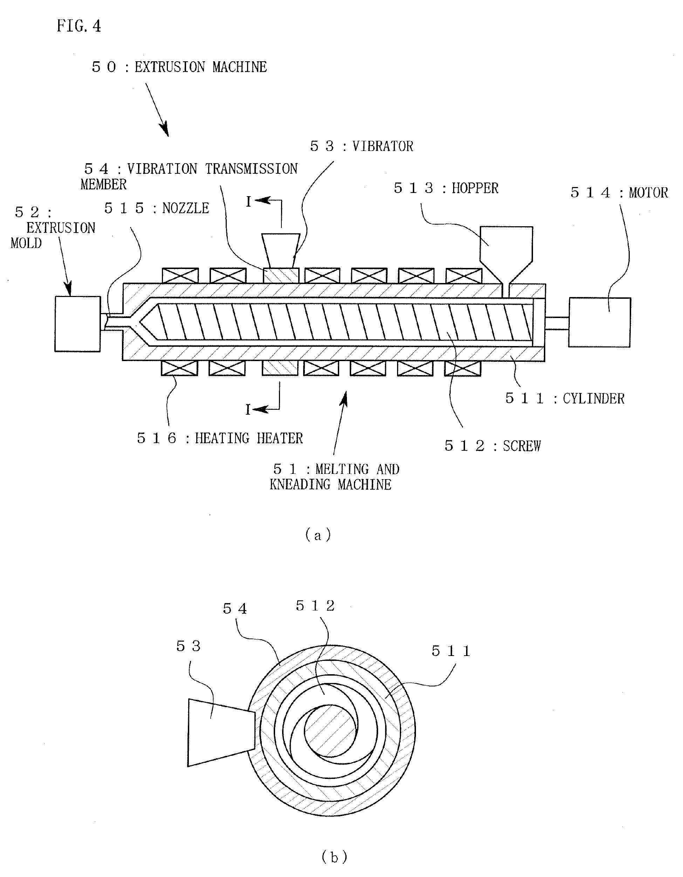

FIG. 4 is concerned with another embodiment in which the present invention is applied to a melting and kneading machine of an extrusion machine, (a) is a schematic diagram showing a whole constitution of a cylinder to which an ultrasonic vibration applying apparatus is attached, and (b) is a sectional view in a I-I direction of (a).

An extrusion machine 50 is used in extrusion molding of pellets or the like, and it comprises an extrusion mold 52, and a melting and kneading machine 51 which melts and kneads the resin material to supply the material to the extrusion mold 52.

The melting and kneading machine 51 includes a cylinder 511, a screw 512 which rotates in the cylinder 511 to mix and extrude the resin material, a hopper 513 which supplies the resin material to the cylinder 511, a heating heater 516 which heats the resin material in the cylinder 511, and a driving device 514 which rotates the screw 512.

Moreover, when the cylinder 511 is heated by the heating heater 516 disposed around the cylinder 511, the resin material supplied from the hopper 513 is molten, and the screw 512 is rotated by the driving device 514 to knead the molten resin material while directing and extruding the material toward the extrusion mold 52.

An annular vibration transmission member 54 which transmits the ultrasonic vibration is attached to the outer peripheral surface of a substantial middle of a compression portion of the cylinder 511 in which the resin material is molten by the heater 516. Moreover, one vibrator 53 for applying the ultrasonic vibration to the vibration transmission member 54 is disposed on an outer periphery of the vibration transmission member 54. In the embodiment, the vibrator 53 and the vibration transmission member 54 constitute a vibrating member.

It is to be noted that also in the embodiment, the vibration transmission inhibition means for inhibiting ultrasonic waves from being transmitted to the other members is disposed, but the means is similar to that of the above-described embodiment, and therefore detailed description is omitted.

Moreover, in the embodiment, a portion which contacts the vibration transmission member 54 in an outer wall of the cylinder 511 functions as vibration transmission means for transmitting the vibration of the vibrator 53 to the resin material. Therefore, the inner peripheral surface of the corresponding portion of the cylinder 511 is subjected to surface processing or surface treatment, and the adhesive properties to the resin material may be enhanced. Concrete means for improving the adhesive properties to the resin material is as described in the above embodiment.

In the vibrating member constituted as described above, when the vibrator 53 vibrates, the vibration is transmitted to the vibration transmission member 54 to constitute a vibration in a diametric direction, and the vibration is applied to the cylinder 511. That is, the ultrasonic vibration is applied to the resin material from a direction crossing a flow direction of the resin material in the cylinder 511 at right angles.

It is to be noted that in the vibrating member constituted as described above, the vibration which does not have any node portion may also be applied to the resin material on the surface contacting the resin material of the cylinder 511. In this case, the vibration transmission member 54 has an inner diameter equal to an outer diameter of the cylinder 511, and the member may be formed to be as thick as possible as long as venter of vibration falls on the inner peripheral surface of the vibration transmission member 54.

Moreover, the vibrator 53 is connected to the vibration transmission member 54 by a rod-like vibration horn having a predetermined length, and the vibration of the vibrator 53 may also be transmitted to the vibration transmission member 54 via the vibration horn.

Furthermore, the vibration transmission member 54 and the vibrator 53 may be formed using metal, ceramic, graphite and the like, but an aluminum alloy or a titanium alloy having a small transmission loss is preferable from a viewpoint of transmission loss of vibration.

The vibration transmission member 54 needs to be fixed in such a manner that resonance is not hindered if possible. The node portion for the fixing is generated in the vibration transmission member 54, and the member may be fixed to the cylinder 511 using this node portion.

The vibrator 53 is vibrated by the ultrasonic oscillator (not shown). Even in this embodiment, since the ultrasonic oscillator handles a change of resonance frequency accompanying a temperature change, or an acoustic load variation accompanying a change of molding condition, the oscillator is preferably of an automatic frequency tracking type provided with an amplitude control circuit.

Moreover, when a necessary ultrasonic output does not reach the required value with one vibrator, a plurality of vibrators 53 may also be used. In this case, the necessary number of vibrators 53 having the same vibrating properties are prepared, and the vibrators may be attached to the outer peripheral surface of the vibration transmission member 54 at equal intervals.

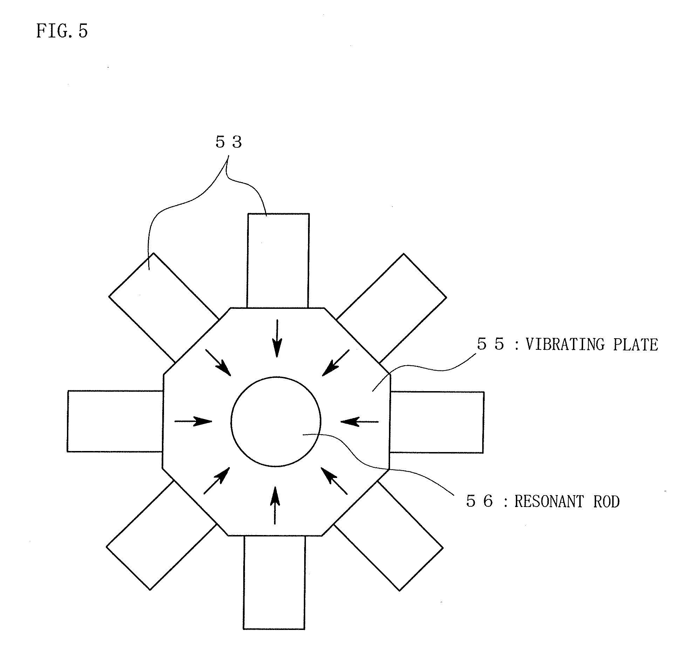

Furthermore, to apply large vibration to the vibration transmission member 54, an ultrasonic output combiner may also be used. In this case, for example, as shown in FIG. 5, the vibrators 53 are bonded to sides of a vibrating plate 55 formed in a polygonal shape (octagonal shape or more) in such a manner that the vibrating properties are not impaired, these vibrators 53 are vibrated in the same phase, outputs are collected in a middle portion, and the vibration may be applied to the vibration transmission member 54 from a resonant rod 56 disposed in the middle portion.

According to the extrusion machine 50 constituted as described above, when the resin material is molten and supplied to the extrusion mold 52, the ultrasonic vibration is applied to the vibration transmission member 54 from the vibrator 53 by the ultrasonic oscillator. Accordingly, the ultrasonic vibration can be applied to the resin material flowing inside the melting and kneading machine 51 from a direction vertical to the flow. Accordingly, values of physical properties such as impact strength and elongation of the resin material can be enhanced, and high-speed extrusion molding is possible.

When the ultrasonic vibration is applied to the resin material by the ultrasonic vibration applying apparatus having the above-described constitution, examples of the resin material in which functionality, kneadability and compatibility are improved and resin modification is facilitated include polymers and copolymers which are broadly used as reflective materials and materials for cars.

Examples of the above-described "resin material" include one or a mixture of two or more of polystyrene-based resins (e.g., polystyrene, butadiene-styrene copolymer, acyrylonitrile-styrene copolymer and acrylonitrile-butadiene-styrene copolymer), ABS resin, polyethylene, polypropylene, ethylene-propylene resin, ethylene-ethylacrylate resin, polyvinyl chloride, polyvinylidene chloride, polybutene, polycarbonate, polyacetal, polyphenylene oxide, polyvinyl alcohol, polymethyl methacrylate, saturated polyester resins (e.g., polyethylene terephthalate and polybutylene terephthalate), biodegradable polyether resins (e.g., a hydroxyl carboxylic acid condensate such as polylactic acid and a condensate of diol and dicarboxylic acid such as polybutylene succinate), polyamide resins, polyimide, resins, fluorine resins, polysulfones, polyether sulfonea, polyarylates, polyether ether ketone, liquid crystal polymers, polyolefin-based elastomers, polyester-based elastomers, and styrene-based elastomers. Of these thermoplastic resins, the polystyrene-based resins and the polyolefin-based resins are preferable, and polystyrene and polypropylene are especially preferable.

Moreover, in the above-described "resin material", a melt flow index measured in the vicinity of a processing temperature may be in a range of 0.05 to 1000 g/10 minutes, preferably 0.1 to 1000 g/10 minutes, more preferably about 1 to 1000 g/10 minutes.

Furthermore, to facilitate the resin modification without adding any modifier, a filler is added to a resin material such as the polymer or the copolymer, and examples of the filler include titanium oxide, silica, calcium carbonate, spherical fillers such as glass beads, plate-like fillers such as talc, mica and clay, and fibrous or rod-like fillers such as carbon nanotube, carbon fiber and glass fiber.

An additional example of the filler is a substance such as a low-melting alloy which has a molten state during extrusion and kneading and which becomes solid at ordinary temperature. A particle diameter of the filler is not especially limited, but a particle diameter of 1 µm or less, especially 0.1 µm or less is also applicable. An amount of the filler to be blend is not especially limited, but a blend ratio of about 1 wt% to a high blend ratio of several tens wt% is applicable.

### [First Embodiment]

Resin material: PP (polypropylene)/elastomer
(1) Extruder: TEX30H biaxial extruder manufactured by the Japan Steel Works, Ltd. was used, and a cylinder temperature of 180°C, a die temperature of 180°C, a discharge amount of 2 kg/h, and a screw rotation number of 100 RPM were employed.

| | |
|---|---|
| Screw dimension A: | Standard dimension |
| Screw dimension B: | Strong kneading dimension |

(2) Ultrasonic waves: A die having a horn for adding vibration to a resin composition in a vertical direction was attached to an outlet of the biaxial extruder.

| | |
|---|---|
| Frequency: | 19.5 kHz |
| Amplitude: | 7 µm |
| Horn material: | Duralumin(Eh 7×10 ^ 10Pa) |

(3) Material composition: To prevent unevenness of a composition, a master batch having a composition made of PP/EPDM = JSR (blend ratio = 25:75) was diluted with PP or diluted with PP and maleic anhydride, and materials dry-blended so as to be ratios of the following A and B were then thrown into a feeder of the extruder:
A: PP/EPDM = 75/25 (PP = F-704NP manufactured by Idemitsu Petrochemical Co., Ltd., EPDM = EP33 manufactured by JSR Co., Ltd.); and
B: PP/EPDM/maleic anhydride-modified PP = 75/25/1 (PP = as defined above, EPDM = as defined above, maleic anhydride-modified PP = H-1000P manufactured by Sanyo Chemical Industries, Ltd.).

(4) Comparative Example

| | Comp. Example 1 | Comp. Example 2 | Comp. Example 3 | Comp. Example 4 |
|---|---|---|---|---|
| Ultrasonic waves | None | None | None | Present |
| Screw type | A | B | B | A |
| Packing | None | | | None |
| Gap (mm) | 0 | | | 0 |
| Die vibration | | | | Present |
| Horn tip Processing and treatment | None | | | None |
| Channel (mm) | 2 | | | 2 |
| Resin composition | A | | | A |
| MI (g/min) | 4.6 | 5.0 | 4.8 | 4.3 |
| Tensile elasticity (23°C) MPa | 720 | 640 | 640 | 720 |
| Charpy impact strength (23°C J/m²) | 13.8 | 15.2 | 14.8 | 12.6 |

| | | | | |
|---|---|---|---|---|
| (Remarks) | | | | |

• The channel (mm) is a distance between a horn tip and a die inner surface facing the tip and forming a channel.
• Comparative Example 1: In a state where the horn and the die were attached, any ultrasonic waves were not applied.
• Comparative Example 2: Kneading was performed at a cylinder temperature of 120 to 200°C in a discharge amount of 5 kg/h at a screw rotation number of 370 RPM by a strong kneading screw dimension without adding any ultrasonic waves.
• Comparative Example 3: Kneading was performed at a cylinder temperature of 200°C in a discharge amount of 5 kg/h at a screw rotation number of 100 RPM by a strong kneading screw dimension without adding any ultrasonic waves.
• Comparative Example 4: The ultrasonic waves were applied, but the die was vibrated without any packing and gap.

(5) Examples

| | Example 1 | Example 2 | Example 3 | Example 4 | Example 5 |
|---|---|---|---|---|---|
| Ultrasonic waves | Present | Present | Present | Present | Present |
| Screw type | A | A | A | A | A |
| Packing | Present | Present | Present | Present | Present |
| Gap (mm) | 0.2 | 0.2 | 0.2 | 0.2 | 0.2 |
| Die vibration | None | None | None | None | None |
| Horn tip Processing and treatment | None | Present | Present | None | Present |
| Channel (mm) | 2 | 2 | 4 | 2 | 2 |
| Resin composition | A | A | A | B | A |
| MI (g/min) | 4.3 | 4.3 | 4.3 | 4.6 | 4.4 |
| Tensile elasticity (23°C) MPa | 720 | 740 | 740 | 710 | 720 |
| Charpy impact strength (23°C J/m²) | 23.8 | 27.2 | 27.4 | 24.1 | 30.8 |

| | | | | | |
|---|---|---|---|---|---|
| (Remarks) | | | | | |

• In all the examples, the ultrasonic waves were applied under the above-described conditions (2).
• In the examples and the comparative examples, molded articles (pellets) obtained by extrusion were injection-molded to prepare test pieces, and they were measured in accordance with the following standards.

Tensile elasticity: Test pieces having a dumbbell shape were prepared in accordance with JIS K7161:94, and a tensile test was then conducted in accordance with JIS K7162:94 standards to obtain the tensile elasticity.

Charpy impact strength: JIS K7111:96
• Example 1: The die vibration was inhibited by the packing and gap (also in Examples 2 to 4, the same conditions were used). The impact strength was improved up to a level which was not attainable by the strong kneading.
• Example 2: A horn was used whose tip was treated with a maleic acid-modified composition (maleic acid-modified PP) in advance. Grooves having a width of 1 mm, an interval of 2 mm and a depth of 0.5 mm were formed in the applying surface of the horn tip.
• Example 3: The horn subjected to the same treatment was used, and the channel was formed into 4 mm. In this example, observation was made through an electronic microscope of 20000 times. As a result, an interface was formed between the mixed PP and elastomer, and in the interface, the elastomer oozed like a feather into a PP matrix side.
• Example 4: A non-treated horn was used, but maleic anhydride was added to the composition.
• Example 5: A duralumin horn was used whose tip was subjected to a sand-blast treatment.

### [Second Embodiment]

Resin material: PP/elastomer/talc
(1) Extruder: A TEX30H biaxial extruder manufactured by the Japan Steel Works, Ltd. was used, and conditions were a cylinder temperature of 180°C, a die temperature of 180°C, a discharge amount of 3 kg/h, and a screw rotation number of 100 RPM.
Screw dimension A
(2) Ultrasonic waves: The same as in the first embodiment
(3) Material composition: The following materials blended by the biaxial kneader beforehand to prevent unevenness of a composition were thrown into a feeder of the extruder.
C: PP1/PP2/EBM/talc/antioxidant/crystal core material = 11.5/53/27/8.5/0.1/0.1 (PP1 = homo PP manufactured by Idemitsu Petrochemical Co., Ltd.) H-5000, PP2 = the same (block PP) J-3057HP, EBM = IT100 manufactured by Mitsui Chemicals, Inc.).
D: PP/maleic acid-modified PP/EBM/organic clay = 42/30/20/8 (5 wt% of inorganic components in the composition) (PP = J-783HV manufactured by Idemitsu Petrochemical Co., Ltd. (block PP), maleic acid-modified PP = H-1000P manufactured by Toyo Chemical Co., Ltd., EBM = IT-100 manufactured by Mitsui Chemicals, Inc., organized clay = MEE manufactured by Cope Chemical Co., Ltd.
(4) Comparative Example

| | Comp. Example 6 | Comp. Example 7 |
|---|---|---|
| Ultrasonic waves | None | None |
| Packing | Present | None |
| Gap (mm) | 0.2 | 0 |
| Die vibration | - | - |
| Horn tip processing and treatment | Present | Present |
| Channel (mm) | 2 | 2 |
| Resin composition | C | D |
| MI (g/min) | 24.8 | 5.0 |
| Tensile elasticity (23°C) MPa | 830 | 1300 |
| Tensile breakage elongation (-20°C) | 37 | 15 |
| Charpy impact strength (23°C J/m²) | 10.2 | 32.0 |

(5) Examples

| | Example 6 | Example 7 | Example 8 | Example 9 |
|---|---|---|---|---|
| Ultrasonic waves | Present | Present | Present | Present |
| Packing | Present | Present | Present | Present |
| Gap (mm) | 0.2 | 1.2 | 1.2 | 0.2 |
| Die vibration | None | None | None | None |
| Horn tip processing and treatment | Present | Present | Present | Present |
| Channel (mm) | 2 | 2 | 2 | 2 |
| Resin composition | C | C | C | D |
| MI (g/min) | 25.0 | 24.8 | 24.5 | 4.6 |
| Tensile elasticity (23°C) MPa | 870 | 870 | 880 | 1300 |
| Tensile breakage elongation (-20°C) | 62 | 89 | 108 | 20 |
| Charpy impact strength (23°C J/m²) | 16.6 | 26.3 | 30.5 | 46.0 |

| | | | | |
|---|---|---|---|---|
| (Remarks) | | | | |

• In all the examples, the ultrasonic waves were applied under the above-described conditions (2).
• In the examples and the comparative examples, molded articles (pellets) obtained by extrusion were injection-molded to prepare test pieces, and they were measured in accordance with the following standards.

Tensile breakage elongation: Test pieces having a dumbbell shape were prepared in accordance with JIS K7161:94, and a tensile test was then conducted in accordance with JIS K7162:94 standards to obtain the tensile breakage elongation.

Charpy impact strength: JIS K7111:96
• In every case, the Charpy impact strength was measured in a state where the die vibration was inhibited by the packing and gap.
• Example 6: A horn was used whose tip portion was treated so as to have grooves having a width of 1 mm, an interval of 2 mm and a depth of 0.5 mm. The elongation and impact strength were rapidly enhanced.
• Example 7: The horn of Example 6 was further plated with chromium.
• Example 8: Grooves having a width of 1 mm, an interval of 1 mm and a depth of 1 mm were formed in the applying surface of the horn tip, and it was then treated with a composition of maleic acid. The impact strength was rapidly improved.

### [Third Embodiment]

(1) Extruder: Labo Plast Mill manufactured by Toyo Seiki Co., Ltd. was used, and conditions were a cylinder temperature of 180°C, a die temperature of 180°C, a discharge amount of 3 kg/h and a screw rotation number of 100 RPM.
(2) Ultrasonic waves: As defined above
(3) Material composition: The following dry-blended materials were thrown into a feeder of Labo Plast Mill.
E: PP/titanium oxide/maleic anhydride = 98/2/1 (PP = (homo PP) J-2000 GP manufactured by Idemitsu Petrochemical Co., Ltd., titanium oxide = CR63 (particle diameter of 200 nm) manufactured by Ishihara Sangyo Kaisha Ltd., maleic anhydride = H-1000P manufactured by Sanyo Chemical Industries, Ltd.).
F: PP/titanium oxide/maleic anhydride = 90/10/1 (as defined above)
(4) Comparative Examples

| | Comp. Example 8 | Comp. Example 9 |
|---|---|---|
| Ultrasonic waves | None | None |
| Packing | Present | None |
| Gap (mm) | 0.2 | 0.2 |
| Die vibration | - | - |
| Horn tip processing and treatment | None | None |
| Channel (mm) | 2 | 2 |
| Resin composition | E | F |
| Dispersed state | A large number of aggregates | A large number of aggregates |

(5) Examples

| | Example 9 | Example 10 |
|---|---|---|
| Ultrasonic waves | Present | Present |
| Packing | Present | Present |
| Gap (mm) | 0.2 | 0.2 |
| Die vibration | None | None |
| Horn tip processing and treatment | None | None |
| Channel (mm) | 2 | 2 |
| Resin composition | E | F |
| Dispersed state | Aggregates reduced by half | Aggregates reduced by half |

| | | |
|---|---|---|
| (Remarks) | | |

• In all the examples, the ultrasonic waves were applied under the above-described conditions (2).
• They were all performed in a state where the die vibration was inhibited by the packing and gap.
• Comparative Example 8 was compared with Example 9 in consideration of conditions that the material composition was E and the ultrasonic waves were applied or not applied, and Comparative Example 9 was compared with Example 10 in consideration of conditions that the material composition was F and the ultrasonic waves were applied or not applied.

The dispersed states in Comparative Example 9 and Example 9 were quantized, and an area of 420 mm² of a sheet obtained by pressing the obtained pellets into a thickness of 100 µm at 230°C was photographed through an optical microscope at random. Number and sizes of aggregates of 50 µm or more were obtained on the basis of pictures. An area average diameter, a volume average diameter and distribution of the diameters were calculated, and the results were compared.

| | | Comparative Example 8 | Example 9 |
|---|---|---|---|
| Number of aggregates | Members | 401 | 226 |
| Area average diameter | µm | 414 | 203 |
| Volume average diameter | µm | 678 | 269 |
| Distribution of diameters | | 4.2 | 2.4 |

As seen from this table, when the ultrasonic vibration is applied, a remarkable dispersion effect was obtained in all points of the number and sizes of aggregates and the distribution of the sizes.

As seen from Examples 1 to 3 described above, in the present invention, rigidity of articles molded by extrusion were improved as much as about 30% to 100%. In addition, the dispersion of the filler was also improved about twice.

### [Fourth Embodiment]

In Examples 11 to 13, an extrusion machine of FIG. 4 was used, pellets were manufactured by the following materials and conditions, and they were injection-molded to prepare test pieces. Then, physical properties were evaluated.

An annular vibration transmission member was inhibited so that a cylinder might not substantially vibrate by the same gap and packing as in Example 1.

Comparative Examples 10 to 12 were conducted in the same manner as in Examples 11 to 13 except that any ultrasonic vibration was applied during manufacturing the pellets.

Differences in physical properties of tensile strength, elongation, bend strength and impact strength were compared, and an improvement ratio was evaluated. The results are shown in Table 1. It is to be noted that the improvement ratio of the physical properties in Table 1 was obtained in accordance with an equation of {(T1-T2)/T2}×100 (%) wherein T1 was physical properties of (the examples) including the ultrasonic treatment and T2 was physical properties of (the comparative examples) including no ultrasonic treatment.

The tensile strength, elongation, bend strength, and impact strength were measured in accordance with the following standards.

| | |
|---|---|
| Tensile strength, elongation | JIS K7162:94 |
| Impact strength | JIS K7111:96 |

Moreover, in all of Examples 11 to 13, ultrasonic waves having a central frequency of 19 KHz and an amplitude of 10 µm were applied for 10 seconds during manufacturing the pellets.

### (Example 11 and Comparative Example 10)

Material: PP-EPDM (ethylene-propylene-diene copolymer elastomer) having a blend ratio of 70 wt% to 30 wt%

### (Example 12 and Comparative Example 11)

Material: PP-metallocene LLDPE (straight-chain low-density polyethylene) having a blend ratio of 70 wt% to 30 wt%

### (Example 13 and Comparative Example 12)

Material: PP-EBM (ethylene-butylene copolymer elastomer) having a blend ratio of 70 wt% to 30 wt%

| | Example 10 | Example 11 | Example 12 |
|---|---|---|---|
| Tensile strength | 10% | 5% | 5% |
| Elongation | 100% | 100% | 50% |
| Impact strength | 150% | 80% | 50% |

The preferable embodiments of the present invention have been described, but the present invention is not limited at all to the above-described embodiments.

For example, when a plurality of horns 32, 35 are disposed in the channel 11 of the above-described resin material, the horns 32, 35 are attached in different directions, and the ultrasonic vibration may also be applied to the resin material from a plurality of directions.

Moreover, in the above description, the end surfaces of the horns 32, 35 are directly brought into contact with the resin material which flows through the channel 11, that is, the end surfaces of the horns 32, 35 constitute a part of the channel 11, but the ultrasonic vibration may be transmitted to the resin material from the horns 32, 35 via the vibration transmission member which transmits the vibrations of the horns 32, 35 to the resin material. For example, the horns 32, 35 are allowed to abut on the outer peripheral surface of the channel 11, and the vibrations of the horns 32, 35 may also be transmitted to the resin material through a wall surface of the channel 11.

### Industrial Applicability

The present invention is also applicable to a thermoplastic resin which has a large viscosity at a melting time, but a thermoplastic resin before/after hardening is more preferable because cavitation or pressure vibration by the ultrasonic easily occurs.

Moreover, improvements of physical properties are confirmed in not only elastomer having double coupling but also elastomer which does not include any double coupling, and the present invention is applicable.

## Claims

1. An apparatus of applying ultrasonic vibration to a resin material which applies the ultrasonic vibration to the resin material in a molten state, the apparatus comprising:
a vibrator which applies the ultrasonic vibration to the resin material, or a vibration transmission member which transmits the vibration of the vibrator to the resin material,
wherein the vibrator or the vibration transmission member is disposed in a channel of the resin material in such a manner as to bring the vibrator or the vibration transmission member into contact with the resin material; and
vibration transmission inhibition means is disposed in such a manner as to substantially inhibit members other than the resin material from being vibrated by the vibration of the vibrator or the vibration transmission member.

2. The apparatus of applying the ultrasonic vibration to the resin material according to claim 1, wherein a member having high adhesive properties to the resin material is selected as the vibrator or the vibration transmission member.

3. The apparatus of applying the ultrasonic vibration to the resin material according to claim 1 or 2, wherein the vibrator or the vibration transmission member is positioned so as to transmit the vibration in a direction crossing a flow direction of the resin material at right angles.

4. The apparatus of applying the ultrasonic vibration to the resin material according to any one of claims 1 to 3, wherein the vibration transmission inhibition means is an elastic member interposed between the vibrating member or the vibration transmission member and the other member.

5. The apparatus of applying the ultrasonic vibration to the resin material according to claim 4, wherein a connecting portion which connects the vibrating member or the vibration transmission member to the other member is progressively formed in a node portion of the vibration transmitted inside the vibrating member or the vibration transmission member, and the elastic member is interposed between the connecting portion and the other member.

6. The apparatus of applying the ultrasonic vibration to the resin material according to claim 4 or 5, wherein E < 0.3Eh is satisfied wherein Eh is an elasticity of the vibrating member or the vibration transmission member, and E is an elasticity of the elastic member.

7. The apparatus of applying the ultrasonic vibration to the resin material according to any one of claims 1 to 3, wherein the vibration transmission inhibition means is a gap interposed between the vibrating member or the vibration transmission member and the other member.

8. The apparatus of applying the ultrasonic vibration to the resin material according to claim 7, wherein a size of the gap is set to 0.05 mm or more and 0.5 mm or less.

9. The apparatus of applying the ultrasonic vibration to the resin material according to any one of claims 1 to 8, wherein a vibration-applied surface, on which the vibrating member or the vibration transmission member contacts the resin material to apply the vibration thereto, is subjected to surface processing and/or surface treatment for improving the adhesive properties of the resin material.

10. The apparatus of applying the ultrasonic vibration to the resin material according to claim 9, wherein the surface processing or the surface treatment is formation of concave/convex portions or grooves, plating, coating of an adhesive properties improver, flame spraying, or a combination of them.

11. The apparatus of applying the ultrasonic vibration to the resin material according to claim 10, wherein the adhesive properties improver is maleic anhydride or a composition of malefic acid.

12. The apparatus of applying the ultrasonic vibration to the resin material according to any one of claims 1 to 11, wherein the vibrator or the vibration transmission member is a horn having any shape of a columnar shape, plate shape, ring shape, circular cone shape, truncated cone shape, conical shape, exponential shape, rectangular parallelepiped shape, cube shape, and a shape in which a slit, cut or flange is formed on any one of these shapes.

13. The apparatus of applying the ultrasonic vibration to the resin material according to claim 12, wherein the plurality of horns are arranged in series or in parallel along the channel.

14. The apparatus of applying the ultrasonic vibration to the resin material according to claim 12, wherein the plurality of horns are arranged around the channel, and the vibration is applied to the resin material from different directions.

15. The apparatus of applying the ultrasonic vibration to the resin material according to any one of claims 1 to 14, wherein the channel is formed in one of a cylinder of an extrusion machine or an injection molding machine, a cylinder of an extruder or a kneader, a chamber, a downstream side from an outlet of the cylinder, and a mold.

16. The apparatus of applying the ultrasonic vibration to the resin material according to any one of claims 1 to 15, wherein the resin material is one of a mixture of two or more resins and/or elastomers, and a mixture of a resin and/or an elastomer and a filler.

17. A method of kneading, compounding and blending a resin material, comprising the steps of:
disposing the ultrasonic vibration applying apparatus according to any one of claims 1 to 16 in a channel through which the resin material having a molten state flows; and
applying the ultrasonic vibration to the resin material which flows through the channel from a direction crossing a flow direction of the resin material at right angles;
the application of the ultrasonic vibration through the vibrator or the vibration transmission member being performed under conditions that members other than the vibrator or the vibration transmission member are not substantially vibrated.

18. A resin composition produced by use of the ultrasonic vibration applying apparatus according to any one of claims 1 to 16.

19. The resin composition according to claim 18, which is produced by mixing two or more thermoplastic resins and/or elastomers, wherein an interface is formed between the mixed thermoplastic resins, and one thermoplastic resin oozes like a feather into the other thermoplastic resin in the interface.
